# EUROPEAN PATENT APPLICATION

(11) **EP 4 750 049 A1**
(43) Date of publication of application: **27.05.2026**
(21) Application number: 25216689.7
(22) Date of filing: 18.11.2025
(51) Int. Cl.: H04N 13/111, G06T 15/20, H04N 13/128

(54) **MONO TO THREE-DIMENSIONAL GAUSSIAN CONVERSION**

(30) Priority: 22.11.2024 US 202463724096 P; 08.05.2025 US 202563801964 P; 05.09.2025 US 202563876863 P; 14.11.2025 US 202519389271
(71) Applicant: Apple Inc., Cupertino, CA 95014 (US)
(72) Inventor: MESCHEDER, Lars, Cupertino, CA, 95014 (US); RICHTER, Stephan R., Cupertino, CA, 95014 (US); KOLTUN, Vladlen, Cupertino, CA, 95014 (US); TAGHAVI NASRABADI, Afshin, Cupertino, CA, 95014 (US); LI, Shiwei, Cupertino, CA, 95014 (US); FANG, Tian, Cupertino, CA, 95014 (US); DONG, Wei, Cupertino, CA, 95014 (US); BAI, Xuyang, Cupertino, CA, 95014 (US); TSIN, Yanghai, Cupertino, CA, 95014 (US); NAHMIAS, Jean-Daniel E., Cupertino, CA, 95014 (US); SANTOS, Marcel S., Cupertino, CA, 95014 (US); HU, Peiyun, Cupertino, CA, 95014 (US); LECOUAT, Bruno Paul Jean-Claude, Cupertino, CA, 95014 (US); ZHEN, Mingmin, Cupertino, CA, 95014 (US); DELAUNOY, Amael, Cupertino, CA, 95014 (US)
(74) Representative: Lang, Johannes

(57) **Abstract**

Various implementations disclosed herein include devices, systems, and methods that produce three-dimensional (3D) Gaussian data representing 3D appearance characteristics of surfaces depicted in 2D image content. For example, a process may obtain a 2D image representing a scene and determine depth information identifying depths of one or more portions of the scene represented in the 2D image. The process may further generate a representation comprising (3D) Gaussian data representing 3D appearance characteristics of the scene represented in the 2D image. The representation may be generated based on the 2D image and the depth information. The process may further provide the representation comprising the 3D Gaussian data for rendering multiple views of the scene from different viewpoints. The rendering may include generating splats based on the 3D Gaussian data for each of the different viewpoints.

## Description

### TECHNICAL FIELD

The present disclosure generally relates to systems, methods, and devices that produce a representation representing three-dimensional (3D) appearance characteristics of surfaces depicted in 2D image content.

### BACKGROUND

Existing techniques for viewing a two-dimensional (2D) image may not adequately facilitate enhancements of such an image with effects that improve realism, viewing of occluded content or other aspects of the image to provide efficient, desirable, and enhanced viewing experiences.

### SUMMARY

Various implementations disclosed herein include devices, systems, and methods that facilitate display of content from a 2-dimensional (2D) image on electronic devices. The content from the 2D image may be displayed in one or more ways that provide a 3D appearance (in a very short time frame such as, for example, less than one second) to the viewer. For example, a device capable of displaying stereoscopic content (e.g., different content displayed to the left and right eyes) such as an HMD may display different content to the eyes to provide a stereo effect that gives the appearance of depth in the content being viewed. Such a device may, for example, display a view of a 3D environment such as an extended reality environment with the 2D image content displayed at a position within that environment (e.g., at a virtual screen or portal a few feet in front of the viewer's viewpoint) and with the left and right eye views providing the image content in a way that a stereo effect provides depth or otherwise provides a 3D appearance within the 2D image content. A 2D image may be presented as a 3D image. In another example, a device may be capable of displaying only a single view at a time (e.g., a mobile device, laptop, etc.) but may provide views of 2D content over time in a way that provides a 3D appearance to the viewer. For example, providing views from different viewpoints over time may provide a parallax effect that provides a 3D appearance. In one such example, the changing viewpoint is based on the viewer's head/eye position relative to the device and as the user moves their head/eye relative to the device the device detects this (e.g., via a user-facing camera) and adjusts the display of the 2D content on the display's screen. In alternative examples, the changing viewpoint is otherwise defined. For example, a player application may present the 2D content in a way that provides a changing viewpoint for the user without the viewer having to move their head/eye, e.g., by presenting the 2D content item as if it were rotating (e.g., slowly rotating back and forth from left to right).

In some implementations, devices, systems, and methods may be configured to produce a representation that includes 3D Gaussian data representing 3D appearance characteristics of surfaces depicted in 2D image content representing a scene. The representation may be configured to render multiple views of the scene from different viewpoints for display via, *inter alia,* a head mounted device (HMD), etc.

In some implementations, 3D Gaussian data may be used to provide 3D views of 2D image content to a viewer by projecting the 3D Gaussian data to generate splats to form 2D views for different viewpoint positions. For example, projecting 3D Gaussian data by generating splats to form 2D views for different viewpoint positions may result in providing stereo effects, parallax effects, lens effects such as, for example, focal length changes, etc. Using a representation with Gaussian data may enable faster and/or more efficient rendering or otherwise provide improved performance and/or produce fewer artifacts to provide better views.

In some implementations, a specialized pipeline architecture may be used to convert a single 2D image or mono video representing a scene into a representation comprising 3D Gaussian data.

In some implementations, an electronic device has a processor (e.g., one or more processors) that executes instructions stored in a non-transitory computer-readable medium to perform a method. The method performs one or more steps or processes. In some implementations, the electronic device obtains a 2D image representing a scene and determines depth information identifying depths of one or more portions of the scene represented in the 2D image. In some implementations, the electronic device generates a representation comprising 3D Gaussian data representing 3D appearance characteristics of the scene represented in the 2D image. The representation may be generated based on the 2D image and the depth information. In some implementations, the electronic device provides the representation comprising the 3D Gaussian data for rendering multiple views of the scene from different viewpoints. The rendering may include generating splats based on the 3D Gaussian data for each of the different viewpoints.

In accordance with some implementations, a device includes one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figures 1A-B illustrate exemplary electronic devices operating in a physical environment.
Figures 2A and 2B illustrate representations for providing a 3D appearance of 2D content to a viewer by providing views of the 2D content that differ based on viewpoint position, in accordance with some implementations.
Figure 3 illustrates a process for creating a six degrees of freedom (6DOF) representation from a single image from a device to reconstruct a spatial scene that allows for realistic 3D effects when viewed on different devices, in accordance with some implementations.
Figure 4 illustrates pipeline architecture that enables a single 2D input image to pass through a network to generate a 6DOF representation comprising 3D gaussian data that may be rendered from multiple viewpoints using Gaussian splatting, in accordance with some implementations.
Figure 5 illustrates an exemplary representation of a pipeline architecture for converting a 2D image or video into 3D Gaussians that may be additionally processed for rendering, in accordance with some implementations.
Figure 6 illustrates an input image processed through a pipeline to generate an output image, in accordance with some implementations.
Figure 7 is a block diagram of an example system illustrating a user device configured to produce a representation representing 3D appearance characteristics of surfaces depicted in 2D image content.
Figure 8 is a flowchart representation of an exemplary method that produces a representation representing 3D appearance characteristics of surfaces depicted in 2D image content, in accordance with some implementations.
Figure 9 is a block diagram of an electronic device of in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

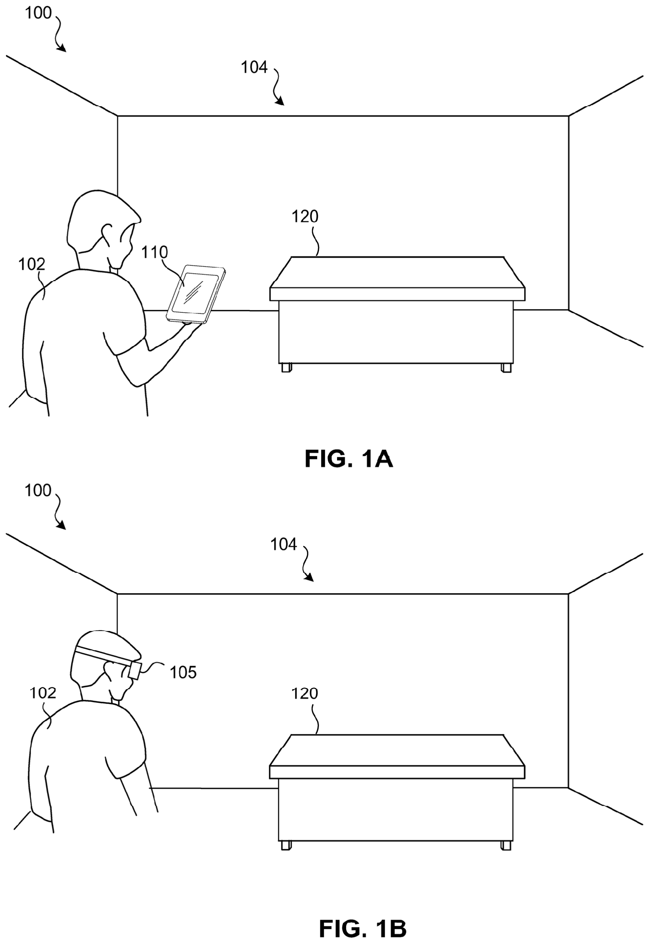

**Figures 1A-B** illustrate exemplary electronic devices 105 and 110 operating in a physical environment 100. In the example of Figures 1A-B, the physical environment 100 includes a room 104 that includes a desk 120. The electronic devices 105 and 110 may include one or more cameras, microphones, depth sensors, or other sensors that can be used to capture information about and evaluate the physical environment 100 and the objects within it, as well as information about the user 102 of electronic devices 105 and 110. The information about the physical environment 100 and/or user 102 may be used to provide visual and audio content and/or to identify the current location of the physical environment 100 and/or the location of the user within the physical environment 100.

In some implementations, views of an XR environment may be provided to one or more participants (e.g., user 102 and/or other participants not shown) via electronic devices 105 (e.g., a wearable device such as an HMD) and/or 110 (e.g., a handheld device such as a mobile device, a tablet computing device, a laptop computer, etc.). Such an XR environment may include views of a 3D environment that is generated based on camera images and/or depth camera images of the physical environment 100 as well as a representation of user 102 based on camera images and/or depth camera images of the user 102. Such an XR environment may include virtual content that is positioned at 3D locations relative to a 3D coordinate system associated with the XR environment, which may correspond to a 3D coordinate system of the physical environment 100.

Various implementations disclosed herein include devices, systems, and methods that implement gaze tracking approaches that use image data. In some implementations, gaze may be tracked using imaging data to determine eye position or eye orientation using a pupil plus glint model, using a depth camera (e.g., stereo, structured light projection, time-of-flight (ToF), etc.) with 3D point cloud registration, or using an appearance-based model.

In some implementations, device 105 and/or device 110 may be configured to obtain a 2D image representing a scene. In some implementations, depth information identifying depths (e.g., intermediate depths) of one or more portions of the scene represented in the 2D image may be determined via, for example, a depth sensor, image analysis, etc.

In some implementations, a representation that includes 3D Gaussian data representing 3D appearance characteristics of the scene represented in the 2D image may be generated. The representation may be generated based on the 2D image and the depth information.

In some implementations, the representation comprising the 3D Gaussian data may be provided for rendering multiple views of the scene from different viewpoints. The rendering may be performed on one of electronic devices 105 and 110. Alternatively, the rendering may be performed on a device external to one of electronic devices 105 and 110.

In some implementations, the rendering may include generating splats based on the 3D Gaussian data for each of the different viewpoints.

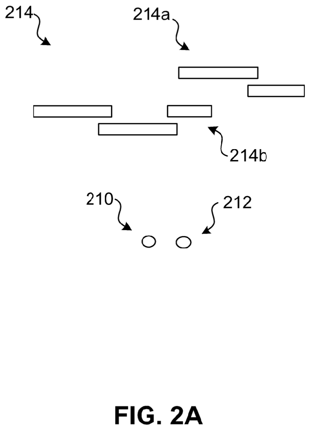

In some implementations, the rendering may provide a stereo effect providing a 3D appearance of the 2D image as described with respect to figure 2A, *infra.*

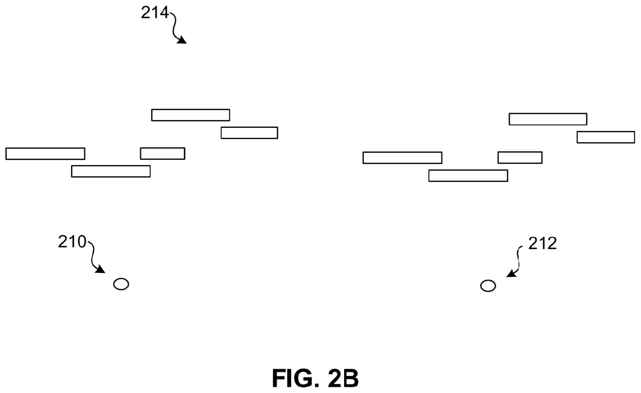

In some implementations, the rendering may provide a parallax effect providing a 3D appearance of the 2D image as described with respect to figure 2B, *infra.*

In some implementations, the rendering may provide a lens effect (e.g., a focal length change) providing an altered appearance of the 2D image.

**Figures 2A** **and** **2B** illustrate representations for providing a 3D appearance of 2D (image) content to a viewer by providing views of the 2D content that differ based on viewpoint position, in accordance with some implementations. Providing views of 2D content that differ based on viewpoint position may include providing different left and right eye viewpoints (e.g., stereo effects as illustrated in figure 2A) or providing different views over time (e.g., parallax effects as illustrated in figure 2B). These different views of the 2D content that differ based on viewpoint position may be enabled by identifying 3D/depth information describing the scene/content depicted in a 2D image, generating a representation that accounts for that 3D/depth information of what is depicted in the 2D image, and subsequently rendering the different views from the differing viewpoints based on utilizing the representation that accounts for the 3D/depth information.

Some implementations disclosed herein facilitate providing views that provide a 3D appearance of 2D image content by generating a representation comprising 3D Gaussian data representing 3D appearance characteristics of surfaces depicted in the 2D image content. The 3D Gaussian data accounts for 3D/depth information of what is being depicted in the image. Using a representation in this format may provide various advantages. For example, using such a representation may enable faster and/or more efficient rendering or otherwise provide improved performance and/or produce fewer artifacts or otherwise provide better views, e.g., with more realistic or otherwise better appearances. Likewise, using such a representation may enable real-time 2D-to-3D image rendering on devices that are power, processing, or otherwise resource constrained, e.g., on HMD and mobile devices that rely on limited battery power, etc.

Implementations disclosed herein may use various forms of representations comprising 3D Gaussian data. In some implementations, 3D Gaussian data may represent surface appearances of different respective portions of surfaces within the scene/content of the 2D image. For example, 3D Gaussian data (including 3D Gaussians) may have one or more parameters that define the appearance at a particular 3D position (e.g., parameters that define the 3D position of a 3D Gaussian, color, the size/shape of a 3D Gaussian, the opacity of a 3D Gaussian, etc.). In some implementations 3D Gaussians are grouped, e.g., to facilitate easier generation of the representation, provide a representation with fewer artifacts/discontinuities, enable hallucination of hidden/occluded areas, facilitate rendering, or otherwise provide benefits. In some implementations, the 3D Gaussians are grouped into layers, e.g., contiguous layers, based on depths. For example, one layer may correspond to a person (e.g., content within a specified depth range from the camera viewpoint) and another layer may correspond to the wall behind that person (e.g., content within a different specified depth range from the camera viewpoint). Layers may be defined to be orthogonal to a view from the camera viewpoint direction. Layers may be extended, e.g., based on hallucination via an AI model or algorithm, to depict image content that is occluded from the camera viewpoint but that will not be occluded from other viewpoints generated using the representation. In other implementations, a representation comprising 3D Gaussian data itself is not extended but rather, when views are rendered, the rendering process hallucinates any needed content, e.g., for portions of the scene that were occluded in the 2D image.

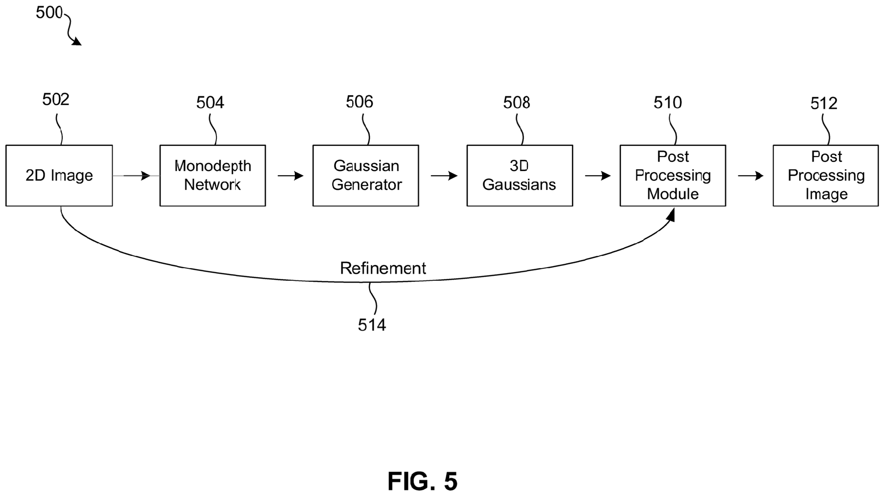

Some implementations disclosed herein include devices, systems, and methods that utilize a specialized pipeline architecture (e.g., pipeline architecture 500 as described with respect to figure 5, *infra*) to convert a single 2D image (or video) representing a scene into a representation comprising 3D gaussian data to render multiple views of the scene from different viewpoints by generating splats based on the 3D Gaussian data for each of the different viewpoints. Such a pipeline may use machine learning (ML) and/or a deterministic rule-based algorithm to create such a representation from a single image. Such a pipeline may generate a six degrees of freedom (6DoF) representation from a single 2D image, e.g., a representation capable of being rendered from multiple viewpoints (different than the camera's original viewpoint) including viewpoints that differ with respect to 6DoF. The representation may not be enabled (or permitted via the viewing application) to view all possible viewpoints, e.g., the representation may not be complete enough for a viewer to walk around to the back-side of a 2D image displayed on a virtual canvas in an XR environment to view an image from the back. However, the representation may be sufficient enough to enable a large range of viewpoints around the camera's original viewpoint. The more a viewpoint differs from the camera viewpoint, the more hallucination may be required. The system may thus limit the range of viewpoints that a viewer (or viewing applications) will allow and provide a treatment, e.g., a fade out, dithering, etc., as the user approaches and exceeds the boundaries of viewpoints positions supported by the representation.

In some implementations, a post processing step may be applied to 3D Gaussian data and or splats to optimize rendering such that when a viewer moves their head or a viewing device, different portions may be seamlessly revealed via the viewing device. In one example, as a user moves their head, the view changes and consequently different portions of the scene of the 2D image content (e.g., portions that were previously not viewable) are revealed (e.g., a texture is extended) to the viewer. For example, if the scene likely included grass in a portion that was occluded from the camera view but that is visible from a rendered view, a corresponding portion of the grass may be generated (e.g., via hallucinating of content that represents occluded portions of a scene).

Some implementations facilitate display of a 2D image with 3D appearance characteristics by generating a representation of the 2D image that comprises 3D Gaussians associated with different 3D positions such as, for example, on different planar layers at different depths. The resulting rendering is generated from a 2D image (e.g., a photo) but is generated in such a way that it represents the 3D aspects of what was depicted in the 2D photo. For example, 3D layer positions/depths (or the 3D Gaussian positions otherwise) represent the 3D depths of objects depicted in the 2D image, e.g., closer objects depicted at closer 3D positions than farther away positions. Specifically, in some implementations, the 3D Gaussians are grouped into layers that are at different depths within the 3D space. It could alternatively work by giving each 3D Gaussian its own 3D position, but this may be more computationally intensive and thus not desirable in many circumstances (e.g., where processing and system resources are limited).

Figure 2A illustrates a stereo effect being provided, for example, on a head mounted device (HMD) with different views for a right eye 212 and a left eye 210. In this use case, views of a representation 214 may be generated for each eye from different eye positions in the 3D space. Each eye's view will be different because, given the different viewpoint position and the different depths of splat layers (e.g., resulting from projecting a 3D gaussian into 2D from a viewpoint), there will be stereo effect differences that provide an appearance of differing depths. Closer objects (represented by splat layers 214b) will have a larger stereo effect and thus will appear closer than farther away objects (represented on farther away splat layers 214a) which will have a smaller stereo effect and thus will appear farther away. A stereo effect may be based on the amount of difference in the left versus right eye view. The more the difference, the greater the stereo effect.

Figure 2B illustrates a parallax effect being provided using content of the image, for example, on a mobile device or tablet with only a single display that both eyes 210 and 212 view simultaneously. In these implementations, only a single viewpoint of the representation 214 may be used at a time and only a single viewpoint may be generated at a time as illustrated in Figure 2B. However, this viewpoint may change over time providing a parallax effect that gives the impression of 3D depth. The user's brain is able to process how the views change over time to infer that objects are at different depths and thus the user perceives the differing depths of the objects depicted in the 2D image.

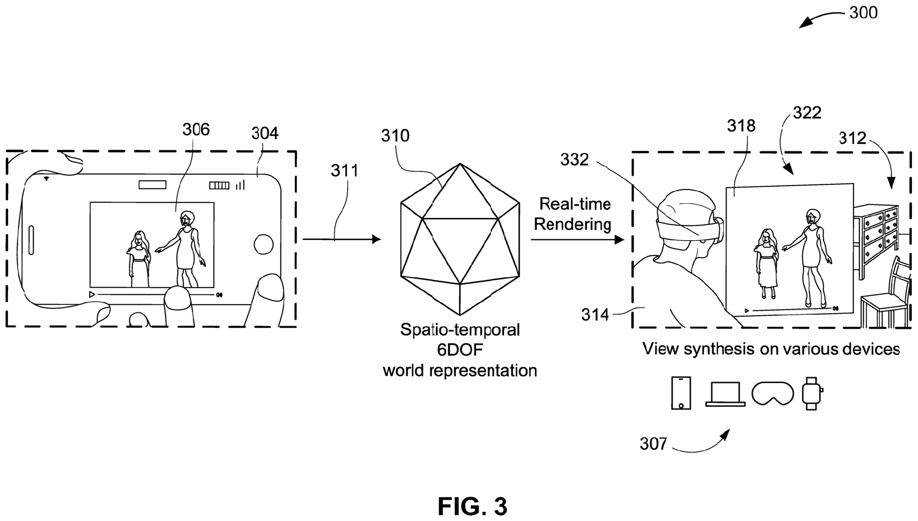

**Figure 3** illustrates a process 300 for creating a six degrees of freedom (6DOF) representation 310 from a single image 306 on a device 304 to reconstruct a spatial scene 322 that allows for realistic 3D effects when viewed on different devices 307, in accordance with some implementations. For example, process 300 may use a pipeline 311 (e.g., machine learning or algorithmic) for real time rendering of 6DOF immersive experiences across different devices 307 such as, *inter alia,* a mobile device, a computer, an HMD, etc. In some implementations, process 300 is configured to enable dynamic parallax and depth-aware rendering (e.g., of image 318 within spatial scene 322) thereby allowing users (e.g., a user 314 using a device 332) to reveal different parts of spatial scene 322 (e.g., furniture 312) as they move their head or device.

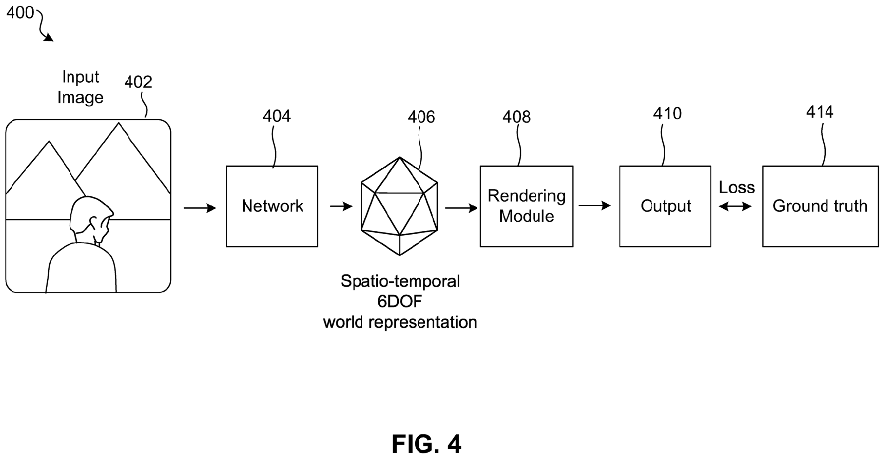

**Figure 4** illustrates pipeline architecture 400 that enables a single 2D input image 402 to pass through a network 404 to generate a 6DOF representation 406 comprising 3D gaussian data that may be rendered (via rendering module 408) from multiple viewpoints using Gaussian splatting, in accordance with some implementations. In some implementations, network 404 may be a machine learning network (e.g., a neural network). In some implementations, network 404 may be an algorithmic rule-based network to convert single 2D image (or video) 402 into a 3D Gaussian representation thereby allowing the rendering of multiple views from different viewpoints. In some implementations, rendering module 408 may use Gaussian splatting to efficiently display 3D views. Likewise, rendering module 408 may support real-time updates based on head/device movement.

In some implementations, network 404 may be trained for interactive 3D representation deployment on different devices such as an HMD, a mobile device, a tablet, etc. In some implementations during training, image 402 may be obtained as input and an image may be produced as output 410 (e.g., a Gaussian representation) and a resulting 3D representation may be rendered into a camera pose corresponding to another view obtained for the network 404. The other view may be compared to the two images (i.e., image 402 and output 410) and ground truth 414 to train the network 404 to produce an optimal 3D representation. In some implementations, real-world and synthetic 3D datasets (e.g., synthetic 3D scene renderings) may be used to generate ground-truth views. For example, a two-stage process may be used to generate ground-truth views. In a first stage, a synthetic pretraining process may be configured to first train on synthetic data with perfect ground truth for both geometry and novel views thereby allowing the network 404 to learn fundamental principles of 3D reconstruction without real-world ambiguities. Likewise, in a second stage a real-world finetuning process may be used to bridge a synthetic-to-real gap by using the pretrained model from the first step to generate pseudo ground truth on real images so that for each real image, a 3D Gaussian representation may be generated to render novel views and finetune a model using these pseudo-novel views as input and an original image as a target. This reverse training approach may cause the network 404 to learn how to reconstruct occluded regions that become visible in an original view thereby enhancing its ability to generate coherent novel views.

Accordingly, the network 404 may be trained with a loss (i.e., associated with regions of a scene that are not viewable), such as for example, a reconstruction loss, by making predictions from different viewpoints and comparing this with ground truth 414 representing what Gaussian data should look like from a rendered scene that was previously not viewable. For example, a loss may be computed/determined based on a difference between a predicted view and a ground-truth view thereby enabling network 404 learn a better 3D representation by enabling it to improve predictions for regions not visible in the original input image 402. In some implementations, a training process enables network 404 to refine its ability to produce a Gaussian-based representation that closely matches real-world occlusion and depth relationships in an environment.

In some implementations, different losses may be used to improve a quality and realism of a 3D representation. For example, losses may include, *inter alia,* perceptual losses (e.g., to improve visual realism), depth losses (e.g., to improve geometric accuracy) and regularization losses (e.g., to reduce artifacts and optimize rendering speed) may be used to suppress floaters (e.g., floating artifacts that cause visual instability in 3D Gaussian splatting) or big Gaussians (e.g., to prevent overly large Gaussians to improve rendering speed), etc. In some implementations, pipeline architecture 400 that enables a loss configuration with view frustum masking that distinguishes between regions requiring strict supervision and those allowing multiple plausible solutions. A view frustum masking technique may be configured to address ambiguity in novel view synthesis to address regions occluded in an original view that may have multiple plausible reconstructions. By using depth information to determine which regions in the novel view correspond to points visible in the original view, supervision may be applied only where ground truth is reliable. In some implementations, calculating a mask includes projecting points from the novel view back to the original view. Likewise, this mask may be applied to the perceptual loss from the novel view thereby ensuring that the network 404 focuses on learning to reconstruct regions visible from both viewpoints while appropriately handling occluded regions.

In some implementations, pipeline architecture 400 may be configured to infer and display view dependent effects such as reflections, specularities, transparencies and refractions. For example, Gaussian splatting may be used to encode view-dependent properties efficiently for real-time rendering to infer and display view-dependent effects such as reflections, specular highlights, transparency, and refractions in a way that dynamically responds to a viewer's position.

**Figure 5** illustrates an exemplary representation of a pipeline architecture 500 for converting a 2D image 502 or video into 3D Gaussians 508 that may be additionally processed for rendering, in accordance with some implementations.

The pipeline architecture 500 is configured to combine a monodepth network 504 with a Gaussian generator 506 to produce an intermediate representation and 3D Gaussians 508 as output. In some implementations, a process for implementing the pipeline architecture 500 to enable network generation of 3D Gaussians 508 may include obtaining a 2D image 502. The 2D image 502 may include a single RGB or grayscale image (or video) capturing a scene and/or object. The 2D image 502 may be used to infer depth and subsequently generate the 3D Gaussians 508.

In some implementations, monodepth network 504 in combination with Gaussian generator 506 include the following modules: (a) a depth backbone that includes a pretrained network to extract features thereby providing rich representations with accurate metric depth information; (b) dual gaussian layer heads configured to produce two distinct layers of Gaussians. For example, a first layer primarily encodes underlying geometry and static scene elements while a second layer specializes in representing view-dependent effects such as specular highlights and reflections; and (c) a delta decoder configured to produces deltas for all Gaussian attributes thereby allowing for fine-grained adjustments that account for complex scene properties that pure depth estimation processes may miss.

In some implementations, the 2D image 502 may be input into a monodepth network 504 to estimate (e.g., using a monocular depth estimation model configured to resolve inherent ambiguities) associated depth information (from the 2D image 502) to produce a depth map or disparity map providing pixel-wise depth information relative to a camera.

In some implementations, monodepth network 504 may be fine-tuned with the Gaussian generator 506 by unfreezing weights of the monodepth network 504. For example, monodepth network 504 (e.g., predicting depth from a single 2D image 502) may be fine-tuned in combination with Gaussian generator 506 (e.g., for modeling view-dependent effects such as reflections, transparency, or refractions).

In some implementations, monodepth network 504 may be configured to produce multiple layers of depth to facilitate a prediction of 3D Gaussians. For example, instead of outputting a single depth map, monodepth network 504 may be configured to estimate multiple depth layers to capture, *inter alia,* foreground surfaces (e.g., opaque objects), semi-transparent layers (e.g., glass, water, etc.), specular reflections & refractions (e.g., mirror-like surfaces), etc. In some implementations, each depth layer may correspond to a different depth hypothesis thereby enabling improved decomposition of complex visual effects.

In some implementations (during a training process), ground truth depth from a 3D renderer (e.g., rendering module 408 as illustrated in figure 4) may be used to disambiguate 3D content. For example, if monodepth network 504 produces multiple depth layers, ground truth depth from a 3D renderer may be configured to assign correct depth values to foreground, midground, and background elements.

In some implementations, a resulting depth map from monodepth network 504 may be combined with additional features of the 2D image 502 for input into the Gaussian generator 506 to generate the 3D Gaussians 508.

In some implementations, the 3D Gaussians 508 may be input into a post processing module 510 to improve rendering. The post processing module 510 may be configured to project the 3D Gaussians 508 onto multiple 2D planes at different depths to generate a multi-plane representation that may include a set of Gaussians for each depth.

In some implementations, 3D Gaussians 508 may be rendered to represent 2D image content at a position in a 3D space. The scene of the 2D image content may be divided into multiple depth layers that may be aggregated and flattened to store as multiplane images for scene rendering to achieve an efficient representation of the scene for use in real-time rendering. Each 2D plane may include semitransparent portions and when all planes are aggregated together to render a reconstructed scene, this allows a user viewpoint to move through 3D space because each plane is standing in the 3D space. Such rendering enables stereo and/or parallax viewing because of the different depths (in 3D space) of the different layers.

In some implementations, the 3D Gaussians 508 being processed by the post processing module 510 may be refined (e.g., via a refinement step 514) to provide improvements with respect to additional data or post-processing to ensure accuracy and robustness. The refinement step 514 may include re-projecting the multi-layer representation back to the 2D image 502 and optimizing Gaussian parameters using a loss function to minimize a difference between the original 2D image 502 and a re-projected image. Subsequently, a post processing image 512 may be generated for real-time rendering of the scene from multiple viewpoints.

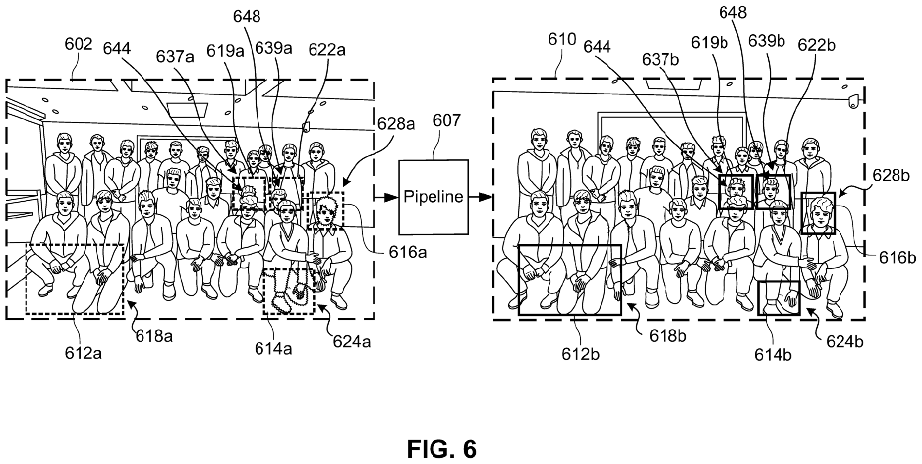

**Figure 6** illustrates an input image 602 processed through a pipeline 607 to generate an output image 610, in accordance with some implementations. In some implementations, pipeline 607 is configured to correct distortion and occlusion issues in input image 602 using 3D representation characteristics and virtual camera adjustments. For example, when using an ultra-wide camera of a device (e.g., a mobile device), a group photo (e.g., input image 602) may include distortions especially at the edges of the image (e.g., faces, limbs, and objects near the borders of the image may appear stretched or warped). Likewise, if a person's face is occluded or hidden by other objects or people (e.g., in group photos), adjusting the virtual camera's position and focal length may reveal an occluded face or create a more accurate representation.

In some implementations, a camera (e.g., an ultra-wide camera) on a mobile device captures image 602 comprising a wide-angle view resulting in areas 612a, 614a, and 616a of distortion caused by a wide field of view stretching objects that are closer to the edges of image 602. For example, area 612a represents a distorted view 618a of legs (e.g., legs appear stretched) of a person in image 602. Likewise, area 614a represents a distorted view 624a of legs and a hand of a person in image 602 and area 616a represents a distorted view 628a of a head of a person in image 602.

In some implementations, image 602 comprises areas 619a and 622a that include faces of people that are partially blocked due to other people located in front of their faces. For example, area 619a represents an occluded view 637a of a face of a person 644 in image 602. Likewise, area 622a represents an occluded view 639a of a face of a person 648 in image 602.

In some implementations, the aforementioned image distortions and occlusions may be corrected via a process (e.g., implemented via use of pipeline 500 of figure 5) using virtual camera parameter adjustments (e.g., modifying a focal length and position of a virtual camera) to reframe image 602 as follows:

In some implementations, the process for converting a 2D image (e.g., image 602) into 3D Gaussians as described with respect to figure 5 may be used to adjust a focal length and/or move a position of a virtual camera to correct the aforementioned distortions (caused by a wide field of view) and occlusions.

For example, distortion in areas 612a, 614a, and 616a may result from a virtual focal length adjustment of a camera. In some implementations, adjusting the virtual focal length in 3D space may allow for distortion compensation caused by an ultra-wide lens. For example, increasing a virtual focal length may cause a field of view to narrow thereby pulling edges of image 602 closer to their true proportions and may help flatten the distorted areas 612a, 614a, and 616a, such as faces and legs by simulating a more natural perspective. Likewise, a position of a virtual camera may be altered to simulate different viewpoints and alter a scene's appearance (as illustrated in image 610). For example, by shifting a virtual camera closer or farther from the scene or even rotating it slightly, objects in image 602 may be repositioned to look less distorted. Likewise, shifting a virtual camera position may enable a more natural composition and perspective of image 602 thereby reducing edge distortion.

In some implementations, a field of view may be estimated without exchangeable image file format (EXIF) data focal length data when an image lacks focal length EXIF metadata. For example, an alternative field of view predictor may be used to estimate an accurate field of view for rendering or display.

In some implementations, a position (in 3D space) of a virtual camera may be adjusted to simulate different viewpoints to allow previously occluded faces to be exposed as a viewpoint shifts. For example, once a position of a virtual camera is adjusted, a scene may be re-rendered from a new viewpoint to enable a previously occluded face to be visible thereby creating a more accurate and immersive representation of a scene.

Once the virtual camera parameters (e.g., virtual focal length and/or camera position) are adjusted, a 3D model of a scene may be rendered from a new viewpoint thereby rendering image 610 representing a corrected version of the original distorted image 602. For example, area 612b (of corrected image 610) represents a corrected view 618b of legs (e.g., the legs look realistic and are no longer stretched) of the person in image 602. Likewise, area 614b represents a corrected view 624b of legs and a hand of the person in image 602 and area 616b represents a corrected view 628b of the head of the person in image 602. Additionally, area 619b represents a corrected/non-occluded view 637b of a face of person 644 and area 622b represents a corrected/non-occluded view 639b of a face of person 648.

In some implementations, a head-box size may be automatically determined based on scene content (e.g. using a field of view and a minimum distance). For example, to dynamically determine a head-box size, field of view, minimum distance constraints, and scene content analysis may be used to ensure an adaptive and context-aware head-box size for rendering or tracking.

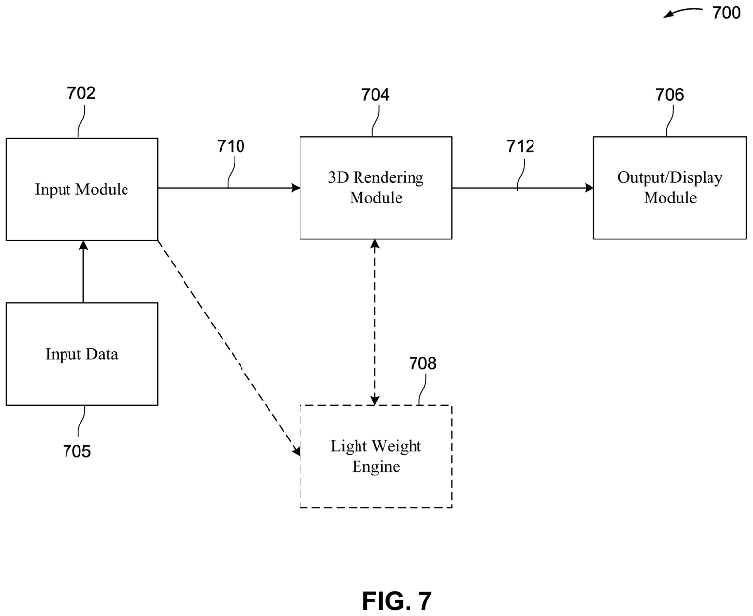

**Figure 7** is a block diagram of an example system illustrating a user device 700 configured to produce a representation (i.e., 3D Gaussian data) representing 3D appearance characteristics of surfaces depicted in 2D image content. The user device 700 (e.g., an HMD, a mobile device. etc.) may include an input module 702, a 3D rendering module 704, an output/display module 706, and a light weight engine 708.

In some embodiments, input module 702 is configured to accept (internal or external to a user device) input data 705 such as a 2D image requiring adjustment.

In some embodiments, inputs 710 from input module 702 can be fed to 3D rendering module 704. 3D rendering module 704 can include one or more learning-based and/or non-learning-based models for perceiving, synthesizing, and inferring information. Persons skilled in the art will appreciate that the 3D rendering module 704 can include any suitable number of rule-based process(es) to generate output 712 based on input 710. In some implementations, 3D rendering module 704 may use 3D Gaussian data to provide 3D views of 2D image content to a viewer by projecting the 3D Gaussian data and generating splats to form 2D views for different viewpoint positions.

In some embodiments, inputs 710 from input module 702 can be fed to 3D rendering module 704 to generate 3D Gaussian data from 2D image content by using a deterministic rule-based algorithm for performing feature extraction, depth estimation, and Gaussian parameterization.

In some embodiments, user device 700 may optionally elect to use a light weight engine 708 instead of 3D rendering module 704 to deterministically use 3D Gaussian data to provide 3D views of 2D image content to a viewer by projecting the 3D Gaussian data and generating splats to form 2D views for different viewpoint positions. The light weight engine 708 may be a non-learning network.

In some embodiments, output/display module 706 is configured to accept results from 3D rendering module 704 and/or a light weight engine 708 to deterministically use 3D Gaussian data to provide 3D views of 2D image content to a viewer by projecting the 3D Gaussian data and generating splats to form 2D views for different viewpoint positions.

For example, output from 3D rendering module 704 and/or a light weight engine 708 is provided to output/display module 706, where output/display module 706 provides 2D views for different viewpoint positions thereby providing stereo, parallax, lens effects enhancing a 3D view of a 2D image.

Persons of ordinary skill in the art will appreciate that 3D rendering module 704 can include any suitable machine learning models that are well-known or widely available such as regression techniques, classification techniques, neural networks, and deep learning networks. For instance, 3D rendering module 704 can include neural networks such as Artificial Neural Network (ANN), Convolutional Neural Network (CNN), Recurrent Neural Network (RNN), Adversarial Network (GAN), Reinforcement Learning Model (RLM), Encoder/Decoder Networks, and/or Transformer-Based Models (e.g., Bidirectional Encoder Representations from Transformers (BERT), Generative Pre-trained Transformer (GPT), and/or a multi-modal large language model (LLM)). Additionally or alternatively, persons of ordinary skill in the art will appreciate that 3D rendering module 704 can be any suitable non-learning processes such as rule-based systems, heuristics, decision trees, knowledge-based systems, statistical or stochastic systems, and expert systems.

In instances where 3D rendering module 704 is a machine-learning based model, the 3D rendering module can be trained for interactive 3D representation deployment on different devices such as an HMD, a mobile device, a tablet, etc. In some implementations during training, an image may be obtained as input and an image may be produced as output (e.g., a Gaussian representation) and a resulting 3D representation may be rendered into a camera pose corresponding to another view obtained for 3D rendering module 704. Likewise, ground truth may be used to train 3D rendering module 704 to produce an optimal 3D representation. In some implementations, real-world and synthetic 3D datasets (e.g., synthetic 3D scene renderings) may be used to generate ground-truth views.

Accordingly, the 3D rendering module 404 may be trained with a loss (i.e., associated with regions of a scene that are not viewable), such as for example, a reconstruction loss, by making predictions from different viewpoints and comparing this with ground truth representing what Gaussian data should look like from a rendered scene that was previously not viewable. For example, a loss may be computed/determined based on a difference between a predicted view and a ground-truth view thereby enabling 3D rendering module 704 to determine a better 3D representation by enabling it to improve predictions for regions not visible in an original input image. In some implementations, a training process enables 3D rendering module 704 to refine its ability to produce a Gaussian-based representation that closely matches real-world occlusion and depth relationships in an environment using one or more well-known or widely available training techniques such as supervised learning, semi-supervised learning, unsupervised learning, and/or reinforcement learning techniques. The training data can include images and contextual information.

In some embodiments, 3D rendering module 704 can be deployed as one or more generative models, where content is automatically generated by one or more computers in response to a request to generate the content. The automatically-generated content is optionally generated on-device (e.g., generated at least in part by a computer system at which a request to generate the content is received) and/or generated off-device (e.g., generated at least in part by one or more nearby computers that are available via a local network or one or more computers that are available via the internet). This automatically-generated content optionally may include visual content (e.g., images, graphics, and/or video) and/or text content.

In some embodiments, novel automatically-generated content is referred to as generative content (e.g., generative images, generative graphics, generative video, and/or generative text). Generative content is typically generated based on a prompt input 710 to the 3D rendering module 704. Input module 702 optionally includes one or more pre-processing steps to adjust the input before it is used by an artificial intelligence (AI) model to generate an output image (e.g., adjustment to a user-provided prompt, creation of a system-generated prompt, and/or AI model selection).

Output/display module 706 optionally includes one or more post-processing steps to adjust the output 712 by the 3D rendering module 704 (e.g., passing the artificial intelligence (AI) model output to a different AI model, upscaling, downscaling, cropping, formatting, and/or adding or removing metadata) before the output 712 of the 3D rendering module 704 used for other purposes such as being provided to a different software process for further processing or being presented (e.g., visually) to a user.

A prompt input 710 for generating generative content can include one or more of: one or more words (e.g., a natural language prompt that is written or spoken), one or more images, one or more drawings, and/or one or more videos. Generative pre-trained transformer models are a type of LLM that can be effective at generating novel generative content based on a prompt input 710. In some embodiments, the 3D rendering module 704 uses a prompt input 710 that includes text to generate either different generative text, generative audio content, and/or generative visual content. In other embodiments, the 3D rendering module 704 uses a prompt input 710 that includes visual content and/or an audio content to generate generative text (e.g., a transcription of audio and/or a description of the visual content). In yet other embodiments, the 3D rendering module 704 uses a prompt input 710 that includes multiple types of content (e.g., text, images, audio, video, and/or other sensor data) to generate generative content. A prompt input 710 sometimes also includes values for one or more parameters indicating an importance of various parts of the prompt. Some prompt inputs 710 include a structured set of instructions that can be provided to the 3D rendering module 704 that include phrasing, a specified style, relevant context (e.g., starting point content and/or one or more examples), and/or a role for the 3D rendering module 704.

Generative content is generally based on the prompt but is not deterministically selected from pre-generated content and is, instead, generated using the prompt as a starting point. In some embodiments, pre-existing content (e.g., audio, text, and/or visual content) is used as part of the prompt for creating generative content (e.g., the pre-existing content is used as a starting point for creating the generative content). For example, a prompt input 710 could request that visual content be modified to include or exclude content specified by a prompt (e.g., removing an identified feature in the visual content, adding a feature to the visual content that is described in a prompt, changing a visual style of the visual content, and/or creating additional visual elements outside of a spatial or temporal boundary of the visual content that are based on the visual content). In some embodiments, a random or pseudo-random seed is used as part of the prompt input 710 for creating generative content (e.g., the random or pseudo-random seed content is used as a starting point for creating the generative content). For example, when generating an image from a diffusion model, a random noise pattern is iteratively denoised based on the prompt input 710 to generate an image. While specific types of 3D rendering module 704 have been described herein, it should be understood that a variety of different 3D rendering module could be used to generate generative content based on a prompt.

In instances where 3D rendering module 704 is a non-learning system, non-learning-based 3D rendering module 704 can use a pre-defined set of rules or a pre-defined structure to make decisions based on the inputs that the process sees. For example, the 3D rendering module 704 can be used to guide a deterministic approach to generate 3D Gaussian data from 2D image content by performing feature extraction, depth estimation, and Gaussian parameterization. For example, edge-detection techniques may be used to extract key structures from a 2D image or video and rule-based heuristics may be used to estimate depth based on known perspective distortion, object size, and/or shading. Likewise, a rule-based gradient-based approach may be used to estimate surface normals for further 3D reconstruction. In some implementations, estimated depth information may be converted into a 3D point cloud and each point in the cloud may be associated with a 3D Gaussian defined by, for example, a 3D position, shape and orientation, opacity and color. Likewise, rule-based filtering may be applied to remove redundancies and refine 3D Gaussians by enforcing smoothness constraints. Subsequently, the 3D Gaussians may be projected into an image plane and a Gaussian splatting renderer may be used to blend projected splats into a new image.

Some embodiments described herein can include use of learning and/or non-learning-based process(es). The use can include collecting, pre-processing, encoding, labeling, organizing, analyzing, recommending and/or generating data. Entities that collect, share, and/or otherwise utilize user data should provide transparency and/or obtain user consent when collecting such data. The present disclosure recognizes that the use of the data in the 3D rendering module 704 can be used to benefit users. For example, the data can be used to train models that can be deployed to improve performance, accuracy, and/or functionality of applications and/or services. Accordingly, the use of the data enables the 3D rendering module 704 to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the 3D rendering module 704 can be used to are also contemplated by the present disclosure.

The present disclosure contemplates that, in some embodiments, data used by the 3D rendering module 704 can be used to include publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with the 3D rendering module 704, should attempt to comply with well-established privacy policies and/or privacy practices.

For example, such entities may implement and consistently follow policies and practices recognized as meeting or exceeding industry standards and regulatory requirements for developing and/or training 3D rendering module 704. In doing so, attempts should be made to ensure all intellectual property rights and privacy considerations are maintained. Training should include practices safeguarding training data, such as personal information, through sufficient protections against misuse or exploitation. Such policies and practices should cover all stages of the 3D rendering module 704 development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data being collected and/or accessed and tailored to a specific use case and applicable laws and standards, including jurisdiction-specific considerations.

In some embodiments, 3D rendering module 704 may utilize models that may be trained (e.g., supervised learning or unsupervised learning) using various training data, including data collected using a user device. Such use of user-collected data may be limited to operations on the user device. For example, the training of the model can be done locally on the user device so no part of the data is sent to another device. In other implementations, the training of the model can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained model can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML model. Accordingly, user-collected data can be protected. In some implementations, data from multiple devices can be combined in a privacy-preserving manner to train an ML model.

In some embodiments, the present disclosure contemplates that data used for 3D rendering module 704 may be kept strictly separated from platforms where the 3D rendering module 704 are deployed and/or used to interact with users and/or process data. In such embodiments, data used for offline training of the 3D rendering module 704 may be maintained in secured datastores with restricted access and/or not be retained beyond the duration necessary for training purposes. In some embodiments, the 3D rendering module 704 may utilize a local memory cache to store data temporarily during a user session. The local memory cache may be used to improve performance of the 3D rendering module 704. However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

In some embodiments, as noted above, techniques such as federated learning, differential privacy, secure hardware components, homomorphic encryption, and/or multi-party computation among other techniques may be utilized to further protect personal information data during training and/or use of the 3D rendering module 704. The 3D rendering module 704 should be monitored for changes in underlying data distribution such as concept drift or data skew that can degrade performance of the 3D rendering module 704 over time.

In some embodiments, the 3D rendering module 704 are trained using a combination of offline and online training. Offline training can use curated datasets to establish baseline model performance, while online training can allow the 3D rendering module 704 to continually adapt and/or improve. The present disclosure recognizes the importance of maintaining strict data governance practices throughout this process to ensure user privacy is protected.

In some embodiments, the 3D rendering module 704 processes may be designed with safeguards to maintain adherence to originally intended purposes, even as the 3D rendering module 704 adapt based on new data. Any significant changes in data collection and/or applications of 3D rendering module 704 use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the 3D rendering module 704 and/or for use as input during the inference stage of such systems. In yet another example, the present technology should be configured to allow users to be able to select to limit the length of time data is maintained or entirely prohibit the use of their data for use by the 3D rendering module 704. In addition to providing "opt in" and "opt out" options, the present disclosure contemplates providing notifications relating to the access or use of personal information. For instance, a user can be notified when their data is being input into the 3D rendering module 704 for training or inference purposes, and/or reminded when the 3D rendering module 704 generate outputs or make decisions based on their data.

The present disclosure recognizes 3D rendering module 704 should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to or failures to cite third-party products and/or services in the outputs should not be construed as endorsements or affiliations by the entities providing the 3D rendering module 704. Generated content can be filtered for potentially inappropriate or dangerous material prior to being presented to users, while human oversight and/or ability to override or correct erroneous or undesirable outputs can be maintained as a failsafe.

The present disclosure further contemplates that users of the 3D rendering module 704 should refrain from using the services in any manner that infringes upon, misappropriates, or violates the rights of any party. Furthermore, the 3D rendering module 704 should not be used for any unlawful or illegal activity, nor to develop any application or use case that would commit or facilitate the commission of a crime, or other tortious, unlawful, or illegal act including misinformation, disinformation, misrepresentations (e.g., deepfakes), deception, impersonation, and propaganda. The 3D rendering module 704 should not violate, misappropriate, or infringe any copyrights, trademarks, rights of privacy and publicity, trade secrets, patents, or other proprietary or legal rights of any party, and appropriately attribute content as required. Further, the 3D rendering module 704 should not interfere with any security, digital signing, digital rights management, content protection, verification, or authentication mechanisms. The 3D rendering module 704 should not misrepresent machine-generated outputs as being human-generated.

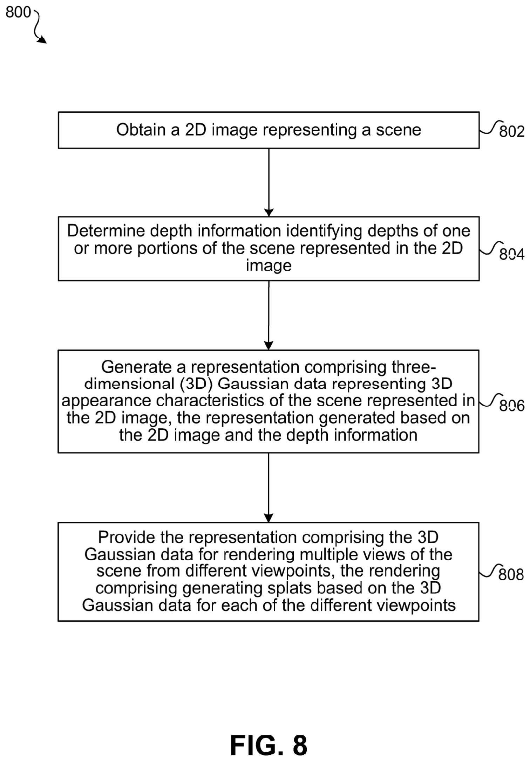

**Figure 8** is a flowchart representation of an exemplary method 800 that produces a representation representing 3D appearance characteristics of surfaces depicted in 2D image content, in accordance with some implementations. In some implementations, the method 800 is performed by a device, such as a mobile device, desktop, laptop, HMD, or server device. In some implementations, the device has a screen for displaying images and/or a screen for viewing stereoscopic images such as an HMD (HMD such as e.g., device 105 of Figure 1). In some implementations, the method 800 is performed by processing logic, including hardware, firmware, software, or a combination thereof. In some implementations, the method 800 is performed by a processor executing code stored in a non-transitory computer-readable medium (e.g., a memory). Each of the blocks in the method 800 may be enabled and executed in any order.

At block 802, the method 800 obtains a 2D image representing a scene. For example, a single 2D input image 402 may be obtained as described with respect to figure 4.

At block 804, the method 800 determines depth information identifying depths of one or more portions of the scene represented in the 2D image. For example, depth information may be obtained via a monodepth network 504 as described, *supra*, with respect to figure 5.

At block 806, the method 800 generates a representation comprising 3D Gaussian data representing 3D appearance characteristics of the scene represented in the 2D image. The representation may be generated based on the 2D image and the depth information. For example, a monodepth network 504 may be combined with a Gaussian generator 506 to produce an intermediate representation and 3D Gaussians 508 as output as described, *supra*, with respect to figure 5.

In some implementations, 3D appearance characteristics may include a 3D position of the representation.

At block 808, the method 800 provides the representation comprising the 3D Gaussian data for rendering multiple views of the scene from different viewpoints as described with respect to figure 5. In some implementations, the rendering may include generating splats (e.g., grouped into layers based on depth information) based on the 3D Gaussian data for each of the different viewpoints. For example, views of a representation 214 may be generated for each eye from different eye positions in 3D space. Each eye's view will be different because, given the different viewpoint position and the different depths of splat layers resulting from projecting a 3D gaussian into 2D from a viewpoint as described, *supra*, with respect to figure 2. In some implementations, the rendering may provide a parallax effect providing a 3D appearance of the 2D image, a lens effect (e.g., associated with focal length changes) providing an altered appearance of the 2D image, and/or a stereo effect providing a 3D appearance of the 2D image. In some implementations, the rendering may be performed on a same electronic device or different electronic device performing the method 800.

In some implementations, 3D appearance characteristics may include, for example, a 3D position, a size, a shape, a color, an opacity level, etc. of each of the splats. In some implementations, at least one of the layers is extended to depict content of the 2D image that is occluded from at least one viewpoint of the different viewpoints but is not occluded from at least one other viewpoint of the different viewpoints.

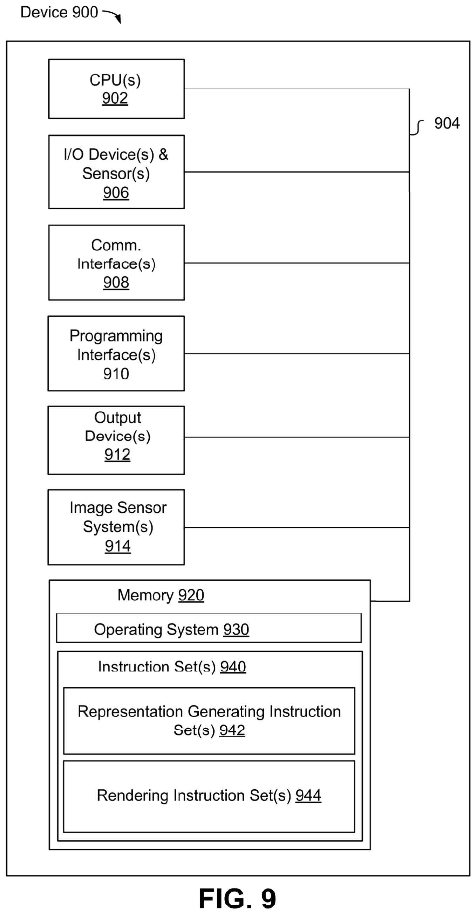

**Figure 9** is a block diagram of an example device 900. Device 900 illustrates an exemplary device configuration for electronic device 105 of Figure 1. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the device 900 includes one or more processing units 902 (e.g., microprocessors, ASICs, FPGAs, GPUs, CPUs, processing cores, and/or the like), one or more input/output (I/O) devices and sensors 904, one or more communication interfaces 908 (e.g., USB, FIREWIRE, THUNDERBOLT, IEEE 802.3x, IEEE 802.11x, IEEE 802.14x, GSM, CDMA, TDMA, GPS, IR, BLUETOOTH, ZIGBEE, SPI, I2C, and/or the like type interface), one or more programming (e.g., I/O) interfaces 910, output devices (e.g., one or more displays) 912, one or more interior and/or exterior facing image sensor systems 914, a memory 920, and one or more communication buses 904 for interconnecting these and various other components.

In some implementations, the one or more communication buses 904 include circuitry that interconnects and controls communications between system components. In some implementations, the one or more I/O devices and sensors 906 include at least one of an inertial measurement unit (IMU), an accelerometer, a magnetometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), one or more cameras (e.g., inward facing cameras and outward facing cameras of an HMD), one or more infrared sensors, one or more heat map sensors, and/or the like.

In some implementations, the one or more displays 912 are configured to present a view of a physical environment, a graphical environment, an extended reality environment, etc. to the user. In some implementations, the one or more displays 912 are configured to present content (determined based on a determined user/object location of the user within the physical environment) to the user. In some implementations, the one or more displays 912 correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more displays 912 correspond to diffractive, reflective, polarized, holographic, etc. waveguide displays. In one example, the device 900 includes a single display. In another example, the device 900 includes a display for each eye of the user.

In some implementations, the one or more image sensor systems 914 are configured to obtain image data that corresponds to at least a portion of the physical environment 100. For example, the one or more image sensor systems 914 include one or more RGB cameras (e.g., with a complimentary metal-oxide-semiconductor (CMOS) image sensor or a charge-coupled device (CCD) image sensor), monochrome cameras, IR cameras, depth cameras, event-based cameras, and/or the like. In various implementations, the one or more image sensor systems 914 further include illumination sources that emit light, such as a flash. In various implementations, the one or more image sensor systems 914 further include an on-camera image signal processor (ISP) configured to execute a plurality of processing operations on the image data.

In some implementations, sensor data may be obtained by device(s) (e.g., device 105 of Figure 1) during a scan of a room of a physical environment. The sensor data may include a 3D point cloud and a sequence of 2D images corresponding to captured views of the room during the scan of the room. In some implementations, the sensor data includes image data (e.g., from an RGB camera), depth data (e.g., a depth image from a depth camera), ambient light sensor data (e.g., from an ambient light sensor), and/or motion data from one or more motion sensors (e.g., accelerometers, gyroscopes, IMU, etc.). In some implementations, the sensor data includes visual inertial odometry (VIO) data determined based on image data. The 3D point cloud may provide semantic information about one or more elements of the room. The 3D point cloud may provide information about the positions and appearance of surface portions within the physical environment. In some implementations, the 3D point cloud is obtained over time, e.g., during a scan of the room, and the 3D point cloud may be updated, and updated versions of the 3D point cloud obtained over time. For example, a 3D representation may be obtained (and analyzed/processed) as it is updated/adjusted over time (e.g., as the user scans a room).

In some implementations, sensor data may be positioning information, some implementations include a VIO to determine equivalent odometry information using sequential camera images (e.g., light intensity image data) and motion data (e.g., acquired from the IMU/motion sensor) to estimate the distance traveled. Alternatively, some implementations of the present disclosure may include a simultaneous localization and mapping (SLAM) system (e.g., position sensors). The SLAM system may include a multidimensional (e.g., 3D) laser scanning and range-measuring system that is GPS independent and that provides real-time simultaneous location and mapping. The SLAM system may generate and manage data for a very accurate point cloud that results from reflections of laser scanning from objects in an environment. Movements of any of the points in the point cloud are accurately tracked over time, so that the SLAM system can maintain precise understanding of its location and orientation as it travels through an environment, using the points in the point cloud as reference points for the location.

In some implementations, the device 900 includes an eye tracking system for detecting eye position and eye movements (e.g., eye gaze detection). For example, an eye tracking system may include one or more infrared (IR) light-emitting diodes (LEDs), an eye tracking camera (e.g., near-IR (NIR) camera), and an illumination source (e.g., an NIR light source) that emits light (e.g., NIR light) towards the eyes of the user. Moreover, the illumination source of the device 900 may emit NIR light to illuminate the eyes of the user and the NIR camera may capture images of the eyes of the user. In some implementations, images captured by the eye tracking system may be analyzed to detect position and movements of the eyes of the user, or to detect other information about the eyes such as pupil dilation or pupil diameter. Moreover, the point of gaze estimated from the eye tracking images may enable gaze-based interaction with content shown on the near-eye display of the device 900.

The memory 920 includes high-speed random-access memory, such as DRAM, SRAM, DDR RAM, or other random-access solid-state memory devices. In some implementations, the memory 920 includes non-volatile memory, such as one or more magnetic disk storage devices, optical disk storage devices, flash memory devices, or other non-volatile solid-state storage devices. The memory 920 optionally includes one or more storage devices remotely located from the one or more processing units 902. The memory 920 includes a non-transitory computer readable storage medium.

In some implementations, the memory 920 or the non-transitory computer readable storage medium of the memory 920 stores an optional operating system 930 and one or more instruction set(s) 940. The operating system 930 includes procedures for handling various basic system services and for performing hardware dependent tasks. In some implementations, the instruction set(s) 940 include executable software defined by binary information stored in the form of electrical charge. In some implementations, the instruction set(s) 940 are software that is executable by the one or more processing units 902 to carry out one or more of the techniques described herein.

The instruction set(s) 940 includes representation generating instruction set 942 and a rendering instruction set 944. The instruction set(s) 940 may be embodied as a single software executable or multiple software executables.

The representation generating instruction set 942 is configured with instructions executable by a processor to generate a representation comprising 3D Gaussian data representing 3D appearance characteristics of the scene represented in a 2D image.

The rendering instruction set 944 is configured with instructions executable by a processor to provide a representation comprising 3D Gaussian data for rendering multiple views of a scene from different viewpoints by generating splats based on the 3D Gaussian data for each of the different viewpoints.

Although the instruction set(s) 940 are shown as residing on a single device, it should be understood that in other implementations, any combination of the elements may be located in separate computing devices. Moreover, Figure 9 is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

Those of ordinary skill in the art will appreciate that well-known systems, methods, components, devices, and circuits have not been described in exhaustive detail so as not to obscure more pertinent aspects of the example implementations described herein. Moreover, other effective aspects and/or variants do not include all of the specific details described herein. Thus, several details are described in order to provide a thorough understanding of the example aspects as shown in the drawings. Moreover, the drawings merely show some example embodiments of the present disclosure and are therefore not to be considered limiting.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, e.g., one or more modules of computer program instructions, encoded on computer storage medium for execution by, or to control the operation of, data processing apparatus. Alternatively, or additionally, the program instructions can be encoded on an artificially generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures. Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, and/or broken into sub-blocks. Certain blocks or processes can be performed in parallel. The operations described in this specification can be implemented as operations performed by a data processing apparatus on data stored on one or more computer-readable storage devices or received from other sources.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

## Claims

1. A method comprising:
at an electronic device having a processor:
obtaining a 2D image representing a scene;
determining depth information identifying depths of one or more portions of the scene represented in the 2D image;
generating a representation comprising three-dimensional (3D) Gaussian data representing 3D appearance characteristics of the scene represented in the 2D image, the representation generated based on the 2D image and the depth information; and
providing the representation comprising the 3D Gaussian data for rendering multiple views of the scene from different viewpoints, the rendering comprising generating splats based on the 3D Gaussian data for each of the different viewpoints.

2. The method of claim 1, further comprising performing the rendering on the electronic device.

3. The method of claim 1, further comprising performing the rendering on a second electronic device different than the electronic device.

4. The method of claim 1, wherein the rendering provides a stereo effect providing a 3D appearance of the 2D image.

5. The method of claim 1, wherein the rendering provides a parallax effect providing a 3D appearance of the 2D image.

6. The method of claim 1, wherein the rendering provides a lens effect providing an altered appearance of the 2D image.

7. The method of claim 6, wherein the lens effect is associated with focal length changes.

8. The method of claim 1, wherein the 3D appearance characteristics comprise a 3D position of the representation.

9. The method of claim 1, wherein the 3D appearance characteristics comprise a 3D position for each of the splats.

10. The method of claim 1, wherein the 3D appearance characteristics comprise a size or shape of each of the splats.

11. The method of claim 1, wherein the 3D appearance characteristics comprise a color of each of the splats.

12. The method of claim 1, wherein the 3D appearance characteristics comprise an opacity level of each of the splats.

13. A system comprising:
a processor;
a computer readable medium storing instructions that when executed by the processor cause the processor to perform operations comprising any one of the methods of claims 1-12.

14. A non-transitory computer-readable medium comprising instructions that when executed by a processor cause the processor to perform operations comprising any one of the methods of claims 1-12.
